# EUROPÄISCHE PATENTSCHRIFT

(11) **EP 0 950 623 B1**
(45) Veröffentlichungstag und Bekanntmachung des Hinweises auf die Patenterteilung: **13.08.2003**
(21) Anmeldenummer: 99250119.7
(22) Anmeldetag: 14.04.1999
(51) Int. Cl.: B65G 1/04

(54) **Vorrichtung zur Lastaufnahme und Lastabgabe von Ladeeinheiten**
Apparatus for withdrawal and insertion of load units
Dispositif pour le stockage et le déstockage d'unités de chargement

(30) Priorität: 17.04.1998 DE 19817935
(43) Veröffentlichungstag der Anmeldung: 20.10.1999
(73) Patentinhaber: SIEMENS AKTIENGESELLSCHAFT, 80333 München (DE)
(72) Erfinder: von, Schneidemesser, Christian, Dipl.-Ing., 45133 Essen (DE); Schatz, Uwe, Dipl.-Ing., 58131 Herdecke (DE); Stoltenhoff, Karl Wilhelm, Ing., 58300 Wetter (DE)

(56) Entgegenhaltungen:
- EP-A- 0 733 563
- DE-C- 3 324 349
- DE-U- 9 101 201

## Beschreibung

Die Erfindung betrifft eine Vorrichtung zur Lastaufnahme und Lastabgabe von Ladeeinheiten gemäß dem Oberbegriff des Anspruchs 1.

Aus der DE 33 24 349 ist eine gattungsgemäße Vorrichtung zur Lastaufnahme und Lastabgabe von Behältern bekannt, die in Fächern einer Regalanlage angeordnet sind. Die Vorrichtung verfügt über Greifer, welche in parallel zueinander angeordneten horizontalen Längsführungen geführt sind. Die Greifer sind neben die Seitenflächen des Behälters verfahrbar und kraftbeaufschlagt an die jeweilige Seitenfläche des Behälters anlegbar. Hierzu ist an jedem Greifer eine Greiffläche vorgesehen. Die Greifflächen beider Greifer liegen einander gegenüber und sind parallel zueinander ausgerichtet. Die Greifelemente werden zur Anlage an den Behälter synchron gegeneinander bewegt. Zur Abfederung des Anpreßdrucks ist eine Federlagerung der Greifelemente vorgesehen.

Nachteilig bei dieser Vorrichtung ist es, daß eine spezielle Behälterform, insbesondere im Greifbereich der Greifelemente, erforderlich ist. Die Behälter müssen darüber hinaus auch in etwa dieselbe Form und Festigkeit aufweisen. Insbesondere schwere Pappkartons können nur gegriffen werden, wenn der Anpreßdruck der Greifer relativ groß gewählt wird.

Die Aufgabe der Erfindung ist es, eine Vorrichtung zur Lastaufnahme und Lastabgabe von Ladeeinheiten zu schaffen, bei der Ladeeinheiten unterschiedlicher Form und Festigkeit sicher gegriffen werden können.

Die Lösung dieser Aufgabe ist erfindungsgemäß durch die im Anspruch 1 angegebenen Merkmale gegeben. Durch die kennzeichnenden Merkmale der Unteransprüche 2 - 14 ist die Vorrichtung in vorteilhafter Weise weiter ausgestaltet.

Die Erfindung sieht vor, daß jeder Greifer mehrere unterschiedlich ausgebildete synchron an die Seitenflächen anlegbare Greifelemente aufweist. Auf diese Weise ist es möglich, daß die Vorrichtung in einem relativ großen Bereich Behälter unterschiedlichster Form und Festigkeit sicher greifen kann.

Eine deutliche Verbesserung des Greifverhaltens ergibt sich, wenn die Greifelemente mindestens zwei unterschiedlich ausgebildete Greifplatten umfassen, die jeweils bevorzugt eine Sorte Ladeeinheiten sicher fassen können. Bei mehreren Greifplatten, also auch bei zwei, ergibt sich die Möglichkeit, daß neben dem kraftschlüssigen Greifen auch ein formschlüssiges Greifen möglich ist, bei dem die Greifplatten formschlüssig in die Seitenflächen eingreifen.

Für Ladeeinheiten mit festen ebenen Seitenflächen ist eine erste vorgesehene Greifplatte mit einer aufgerauhten ebenen Fläche als Greiffläche ausgebildet.

Zum Erfassen von weicheren, nachgiebigeren Ladeeinheiten wird mit der Erfindung vorgeschlagen, daß in einer zweiten Greifplatte eine Vielzahl von sägezahnförmigen vertikalen Vertiefungen als Greiffläche ausgebildet sind.

Zweckmäßigerweise ist die Dicke der zweiten Greifplatte kleiner als die Dicke der ersten, so daß die sägezahnförmigen Vertiefungen erst dann wirksam werden, wenn die Ladeeinheit aufgrund des Anpreßdrucks an die Seitenflächen nachgibt.

Zur Verstärkung der Greifwirkung wird die Verwendung eines dritten Greifelements vorgeschlagen, nämlich ein dornartiger Vorsprung, der an mindestens einer der Greifplatten angeordnet, sich senkrecht zu dieser und zum gegenüberliegenden Greifer hin erstreckt.

Die Länge des Dorns sollte etwas größer als die Dicke der ersten Greifplatte gewählt werden, so daß diese stets leicht in die Seitenfläche der Lagereinheit formschlüssig eingreift.

Um beim Einlagern in ein Regal eine gute Ausrichtung der Ladeeinheit zu erreichen und die Greifelemente zu entlasten, wird vorgeschlagen, daß jeder Greifer eine zum gegenüberliegenden Greifer hin sich erstreckende Anlageplatte mit einer abgewandten vertikalen Anlageflächen in Einlagerrichtung aufweist. Die Anlageplatte schiebt in die Ladeeinheit beim Einlagern in das Regalfach, so daß die Greifelemente wirksam unterstützt werden.

Um eine in das Regal einzulagernde Lagereinheit am vorderen und am hinteren Ende greifen bzw. um beidseitig der Vorrichtung angeordnete Regale bedienen zu können, ist der Greifer in bezug auf die Anlageplatte symmetrisch aufgebaut, d. h. daß in Anlagerichtung gesehen auf beiden Seiten der Anlageplatte jeweils dieselben Greifelemente in derselben Anordnung vorgesehen sind.

Eine gleichmäßige synchrone Anlage ergibt sich, wenn die Längsführung zur Anlage der Greifelemente an die Ladeeinheit gegeneinander synchron bewegbar sind.

Eine einfache Lösung sieht vor, daß das nicht mit dem Antrieb verbundene Ende einer Spindel in einer an der Längsführung fest angeordneten Spindelmutter gelagert ist.

Zur Steuerung des Anpreßdrucks wird vorgeschlagen, daß der Antrieb durch einen Servomotor gebildet ist, der bei Erreichen eines vorbestimmten Motorstromwertes selbsttätig auf diesen Wert begrenzbar ist.

Um eine synchrone Bewegung der Längsführungen bezüglich einer Mitte zu erzielen, wird vorgeschlagen, daß die Längsführung über einen jeweils mittig zu den Längsführungen am Rahmen drehgelagerten Doppelhebel gelenkig miteinander verbunden sind.

Ein Ausführungsbeispiel der Erfindung ist in der Zeichnung dargestellt und wird nachfolgend näher beschrieben. Es zeigen:
- Fig. 1: eine Greifvorrichtung in Bereitschaftsstellung mit einem einfach gestalteten Greifer,
- Fig. 2 u. 3: zwei Ansichten einer verbesserten Ausgestaltung des Greifers gemäß Fig. 1,
- Fig. 4: eine Draufsicht auf die Greifvorrichtung gemäß Fig. 1 und
- Fig. 5 u. 6: die Greifvorrichtung gemäß Fig. 1 während der Entnahme einer Ladeeinheit aus einem Regalfach.

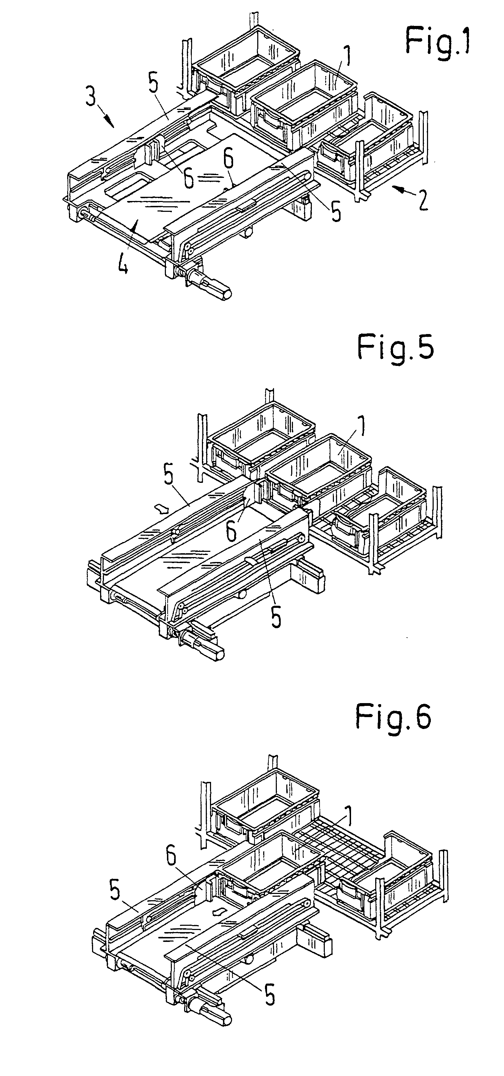

Fig. 1 zeigt die Situation vor der Entnahme eines Behälters als Ladeeinheit 1 aus einem Regalfach 2 eines Regallagers mittels einer Vorrichtung 3 zur Lastaufnahme und Lastabgabe, deren Greifvorrichtung 4 zur Entnahme der Ladeeinheit 1 vor dem Regalfach 2 angeordnet ist. Die Greifvorrichtung 4 besteht aus zwei in einer horizontalen Ebene parallel zueinander angeordneten Längsführungen 5. An jeder Längsführung 5 ist jeweils ein in deren Längsrichtung geführter Greifer 6 verfahrbar. Die Greifer 6 der beiden Längsführungen 5 liegen jeweils einander gegenüber und befinden sich in Fig. 1 in ihrer Bereitschaftsstellung.

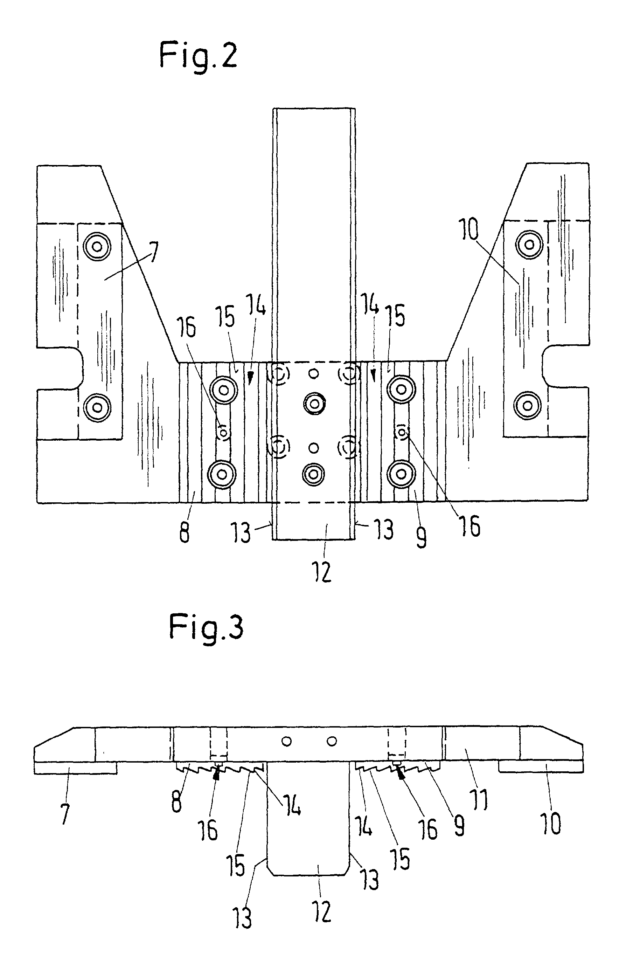

Die Figuren 2 und 3 zeigen einen speziell ausgestalteten Greifer in zwei verschiedenen Ansichten. Dieser Greifer 6 weist als Greifelemente insgesamt vier Greifplatten 7, 8, 9, 10 auf, die in Reihe hintereinander flach auf derselben Seite einer Grundplatte 11 angeordnet sind. Zusätzlich ist eine vertikale Anlageplatte 12 senkrecht zur Grundplatte 11 und zu den Greifplatten 7, 8, 9, 10 befestigt, wobei gemäß der Draufsicht in Fig. 3 links von der Anlageplatte 12 zwei Greifplatten 7, 8 und rechts zwei Greifplatten 9, 10 angeordnet sind. Die Anlageplatte 12 weist weiter einander abgewandte vertikale Anlageflächen 13 auf, die senkrecht zu den Greifplatten 7, 8, 9, 10 verlaufen. Wie insbesondere Fig. 3 erkennen läßt, sind die Greifplatten 7, 10 aufgerauht, während die Greifplatten 8, 9 mit sägezahnförmigen vertikalen Vertiefungen versehen sind.

Jeder Sägezahn der Greifplatten 8, 9 hat zwei vertikale Außenflächen 14, 15, wobei die Außenfläche 14 senkrecht zur Grundplatte 11 bzw. zur Greifplatte 7, 10 des Greifers 6 ausgerichtet ist. Die Außenfläche 15 ist dagegen schräg zur Grundplatte 11 bzw. zur Greifplatte 7, 10 angeordnet, so daß sich die in Fig. 3 dargestellte spezielle Sägezahnform ergibt. Außerdem zeigt Fig. 3 einen senkrecht zu den Greifplatten 7, 10 zum jeweils anderen Greifer 6 hin ausgerichteten Dorn 16 beidseitig der Anlageplatte 12.

Die Dicke der Greifplatten 7,10 und 8,9 ist unterschiedlich ausgebildet. So ist die Dicke der Greifplatten 7,10 um etwa einen Millimeter größer als die der Greifplatten 8,9. Hierbei bezieht sich die Dicke der Greifplatten 8,9 auf die Höhe der Zähne, gemessen an deren Spitzen. Die Länge der Dorne 16 ist ca. einen Millimeter größer als die Dicke der Greifplatten 7,10. Am wenigsten weit ragen also die Spitzen der sägezahnförmigen Greifplatten 8, 9 in den Raum zwischen den einander gegenüberliegenden Greifern 6 hinein. Die Greifplatten 7, 10, 8, 9 jedes Greifers 6 liegen außerdem jeweils in einer gemeinsamen vertikalen Ebene. Die unterschiedlich dick ausgebildeten Greifplatten 7, 10 und 8,9 und die in Bezug dazu gewählte Länge der Dorne 16 dienen der besseren Anpassung an unterschiedliche Ladeeinheiten 1, insbesondere wenn für die Ladeeinheiten 1 unterschiedliches Material verwendet wird. So sind die sägezahnförmige Greifplatten beispielsweise nur bei Pappkartons und dergleichen wirksam, während die Dorne 16 beim Greifen stets beteiligt sind.

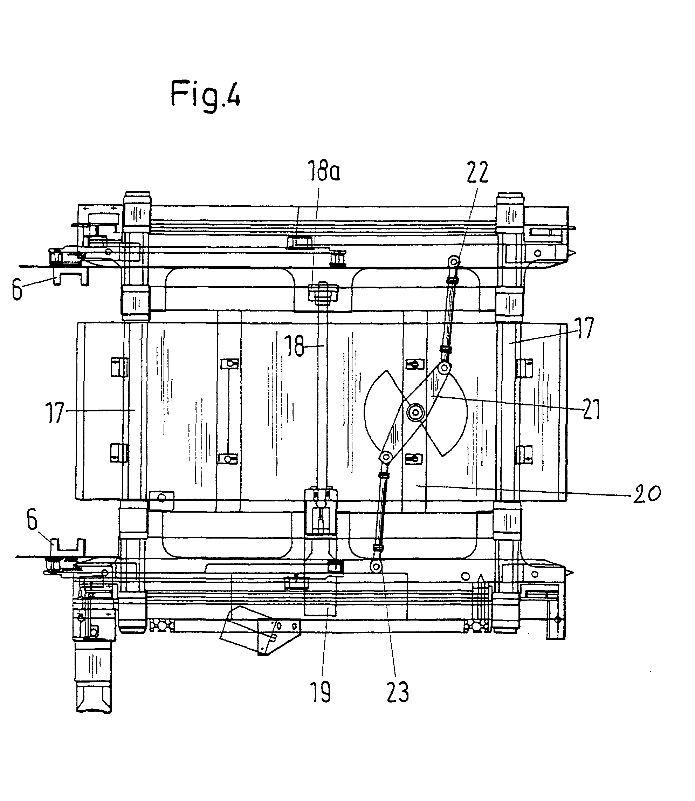

Fig. 4 zeigt eine Draufsicht auf die Greifvorrichtung gemäß Fig. 1, wobei die Greifer 6, wiederum nur schematisch dargestellt sind. Die beiden Längsführungen 5 sind auf quer zu diesen angeordneten Querträgern 17 längsverschiebbar abgestützt und über eine Spindel 18 miteinander verbunden. Ein Ende der Spindel 18 wird von einem Servomotor 19 angetrieben und ist auf dieser Seite an der zugehörigen Längsführung 5 frei drehbar gelagert. Das gegenüberliegende Ende der Spindel 18 ist in einer Spindelmutter 18a drehgelagert, die an der gegenüberliegenden Längsführung 5 drehfest befestigt ist. So werden bei laufendem Antrieb durch den Servomotor 19 beide Längsführungen aufeinander zubewegt. Damit diese Bewegung synchron zur Mitte verläuft, ist mittig zu den Längsführungen 5 an einem Rahmen 20 ein Doppelhebel 21 mit vertikaler Drehachse drehgelagert. An den Enden des Doppelhebels 21 sind wiederum jeweils ein Ende einer Zugstange 22, 23 gelenkig gelagert, deren freie Enden wiederum jeweils an einer der Längsführungen 5 gelenkig befestigt sind. Die Verbindung Zugstange 22-Doppelhebel 21-Zugstange 23 sorgt über den mittig am Rahmen 20 fixierten Drehpunkt des Doppelhebels 21 dafür, daß sich die beiden Längsführungen 5 stets synchron auf die Mitte zu oder von dieser weg bewegen.

Alternativ kann die Spindel 18 selbstverständlich auch auf einer Seite ein Rechts- und auf der anderen Seite ein Linksgewinde tragen. In diesem Fall kann auf den Doppelhebel 21 verzichtet werden. Statt einer Spindel können auch zwei Spindeln mit je einem Motor verwendet werden. Weiter ist die Querbewegung - statt mittels einer Spindel - auch mittels Zahnriemen oder Kette durchführbar. Ferner ist es auch möglich, daß der Querantrieb pneumatisch erfolgt.

Die beiden in Fig. 4 dargestellten Greifer 6 sind in einer Längsnut der zugehörigen Längsführung 5 mittels eines Zahnriemens (beide nicht gezeigt) synchron verschiebbar geführt. Die Synchronisation der beiden Greifer 6 erfolgt über eine zusätzliche, quer zu den Längsführungen 5 angeordnete Verbindungswelle (nicht dargestellt), deren Länge in bekannter Weise veränderbar ist.

Fig. 5 zeigt, zusammen mit den Figuren 1 und 6, die Entnahme einer Ladeeinheit 1. Gegenüber Fig. 1 wurden die Längsführungen 5 vorher mittels des Servomotors 19 in etwa auf die Breite der Ladeeinheit 1 zusammengefahren, unter Belassung eines Übermaßes von wenigen Zentimetern. Danach erfolgte die synchrone Verschiebung der beiden Greifer 6 zur Ladeeinheit 1 hin bis in ihre Endpositionen, wo sie sich über die Außenkontur der Greifvorrichtung hinaus teilweise in das Regal hinein erstrecken. Bei Erreichen ihrer Endpositionen werden die Längsführungen 5 und auf diese Weise die Greifer 6 synchron gegeneinander bewegt, so daß die parallel zueinander sowie im wesentlichen auch zu den Seitenflächen der Ladeeinheit 1 ausgerichteten vorderen Greifplatten 9,10 an die Seitenflächen der Ladeeinheit 1 angelegt werden. Um eine Zerstörung oder Beschädigung der Ladeeinheit 1 zu vermeiden, wird der Servomotor 19 bei Erreichen eines bestimmten Motorstromwertes, der einem bestimmten Anpreßdruck entspricht, selbsttätig auf diesen Wert begrenzt. Die so erfaßte Ladeeinheit 1 wird anschließend durch Zurückziehen der Greifer 6 aus dem Regalfach 2 gezogen.

Um die Längsführungen 5 vor der Entnahme auf die Breite der Ladeeinheit 1 vorpositionieren zu können, sind die Breiten der in den Regalfächern 2 abgelegten Ladeeinheiten 1 in einem elektronischen Speicher abgelegt. Diese Werte werden von einer für die Steuerung der Bewegung der Längsführungen 5 vorgesehenen Steuereinrichtung vor der Entnahme einer der Ladeeinheiten 1 abgerufen und zur Voreinstellung des Abstands der Längsführungen 5 zueinander verwendet. Die Erfassung der Breite der Ladeeinheiten 1 erfolgt vor deren Zuführung zum Regallager.

Weiter sind in dem Speicher auch die Art der in den Regalfächern 2 gelagerten Ladeeinheiten 1 abgelegt, so daß der Grenzwert des Motorstromwertes von Regalfach zu Regalfach vorgebbar ist, um so immer den optimalen Anpreßdruck zu gewährleisten, ohne die Ladeeinheiten 1 zu beschädigen.

Es ist vorgesehen, daß neben dem kraftschlüssigen Greifen auch ein formschlüssiges Greifen möglich ist, bei dem die Greifplatten formschlüssig in die Seitenflächen der Ladeeinheit 1 eingreifen, welche hierzu eine korrespondierende Vertiefung aufweisen.

### Bezugszeichenliste:

- 1: Ladeeinheit
- 2: Regalfach
- 3: Vorrichtung zur Lastaufnahme und Lastabgabe
- 4: Greifvorrichtung
- 5: Längsführung
- 6: Greifer
- 7: Greifplatte
- 8: Greifplatte
- 9: Greifplatte
- 10: Greifplatte
- 11: Grundplatte
- 12: Anlageplatte
- 13: Anlagefläche
- 14: Außenfläche
- 15: Außenfläche
- 16: Dorn
- 17: Querträger
- 18: Spindel
- 18a: Spindelmutter
- 19: Servomotor
- 20: Grundrahmen
- 21: Doppelhebel
- 22,23: Zugstange

## Patentansprüche

1. Vorrichtung (3) zur Lastaufnahme und Lastabgabe von Ladeeinheiten (1), insbesondere in Regallager (2),
mit einer Greifvorrichtung (4) für die Ladeeinheit, deren Greifer (6) in parallel zueinander angeordneten Längsführungen (5) in einer horizontalen Ebene geführt, in Einlagerrichtung beidseitig neben die Seitenflächen der Ladeeinheit (1) verfahrbar und zum Greifen kraftbeaufschlagt an die jeweils gegenüberliegende Seitenfläche der Ladeeinheit anlegbar sind,
wobei an jedem Greifer (6) mindestens eine Greifplatte vorgesehen ist und die Greifplatten beider Greifer einander gegenüberliegen und zueinander parallel ausgerichtet sind,
**dadurch gekennzeichnet,**
**daß** jeder Greifer (6) mindestens zwei unterschiedlich ausgebildete synchron an die Seitenflächen anlegbare Greifelemente aufweist.

2. Vorrichtung nach Anspruch 1,
**dadurch gekennzeichnet,**
**daß** die Greifelemente mindestens zwei Greifplatten (7, 8, 9, 10) umfassen.

3. Vorrichtung nach Anspruch 2,
**dadurch gekennzeichnet,**
**daß** eine erste Greifplatte (7, 10) mit einer aufgerauhten ebenen Fläche als Greifplatte ausgebildet ist.

4. Vorrichtung nach Anspruch 2,
**dadurch gekennzeichnet,**
**daß** in einer zweiten Greifplatte (8, 9) eine Vielzahl sägezahnförmiger vertikaler Vertiefungen als Greifplatte ausgebildet sind.

5. Vorrichtung nach Anspruch 4,
**dadurch gekennzeichnet,**
**daß** die Dicke der zweiten Greifplatte (8, 9) kleiner ist als die Dicke der ersten Greifplatte (7, 10).

6. Vorrichtung nach einem der Ansprüche 1 bis 5,
**dadurch gekennzeichnet,**
**daß** an mindestens einer der Greifplatten (7, 8, 9, 10) mindestens ein sich senkrecht zu dieser und zum gegenüberliegenden Greifer (6) hin erstreckender dornartiger Vorsprung (Dorn 16) angeordnet ist.

7. Vorrichtung nach Anspruch 6,
**dadurch gekennzeichnet,**
**daß** die Länge des Dorns (16) größer ist als die Dicke der ersten Greifplatte (7, 10).

8. Vorrichtung nach einem der Ansprüche 1 bis 7,
**dadurch gekennzeichnet,**
**daß** jeder Greifer (6) eine zum gegenüberliegenden Greifer (6) hin sich erstreckende Anlageplatte (12) mit einander abgewandten vertikalen Anlageflächen (13) in Einlagerrichtung aufweist.

9. Vorrichtung nach Anspruch 8,
**dadurch gekennzeichnet,**
**daß** in Einlagerrichtung gesehen auf beiden Seiten der Anlageplatte (12) jeweils dieselben Greifelemente in derselben Anordnung vorgesehen sind.

10. Vorrichtung nach einem der Ansprüche 1 bis 9,
**dadurch gekennzeichnet,**
**daß** die Längsführungen (5) zur Anlage der Greifelemente an die Ladeeinheit (1) gegeneinander synchron bewegbar sind.

11. Vorrichtung nach einem der Ansprüche 1 bis 10,
**dadurch gekennzeichnet,**
**daß** die Längsführungen (5) über eine angetriebene Spindel (18) miteinander verbunden sind, deren Enden jeweils an einer der Längsführungen (5) drehgelagert sind.

12. Vorrichtung nach Anspruch 11,
**dadurch gekennzeichnet,**
**daß** das nicht mit dem Antrieb verbundene Ende einer Spindel (18) in einer an der Längsführung (5) fest angeordneten Spindelmutter (18a) gelagert ist.

13. Vorrichtung nach einem der Ansprüche 1 bis 12,
**dadurch gekennzeichnet,**
**daß** der Antrieb durch einen Servomotor (19) gebildet ist, der bei Erreichen eines vorbestimmten Motorstromwertes selbsttätig auf diesen Wert begrenzbar ist.

14. Vorrichtung nach einem der Ansprüche 1 bis 13,
**dadurch gekennzeichnet,**
**daß** die Längsführungen (5) über einen jeweils mittig zu den Längsführungen (5) am Rahmen (20) drehgelagerten Doppelhebel (21) gelenkig miteinander verbunden sind.

## Claims

1. Mechanism (3) for taking up and depositing load units (1), particularly in shelf store compartments (2),
with a gripping device (4) for the load units, whose grippers (6) are guided in a horizontal plane in longitudinal guides (5) arranged parallel to one another, the said grippers being movable in the insertion direction on both sides alongside the side surfaces of the load units (1) and also movable so that they can be brought in contact under the action of force against the respective opposite side faces of the load unit in order to grip it,
such that on each gripper (6) at least one gripping plate is provided and the gripping plates of the two grippers are opposite one another and are directed parallel to one another,
**characterised in that**
each gripper (6) comprises at least two differently designed gripping elements that can be brought in contact synchronously against the said side surfaces.

2. Mechanism according to Claim 1,
**characterised in that**
the gripping elements comprise at least two gripping plates (7, 8, 9, 10).

3. Mechanism according to Claim 2,
**characterised in that**
a first gripping plate (7, 10) is formed as a gripping plate with a roughened, flat surface.

4. Mechanism according to Claim 2,
**characterised in that**
in a second gripping plate (8, 9) a number of saw-tooth shaped vertical recesses are formed as the gripping surface.

5. Mechanism according to Claim 4,
**characterised in that**
the thickness of the second gripping plate (8, 9) is smaller than that of the first gripping plate (7, 10).

6. Mechanism according to any of Claims 1 to 5,
**characterised in that**
on at least one of the gripping plates (7, 8, 9, 10) is arranged at least one prong-like projection (prong 16) extending perpendicularly thereto and towards the opposite gripper (6).

7. Mechanism according to Claim 6,
**characterised in that**
the length of the prong (16) is greater than the thickness of the first gripping plate (7, 10).

8. Mechanism according to any of Claims 1 to 7,
**characterised in that**
each gripper (6) comprises a contact plate (12) extending towards the opposite gripper (6) with vertical contact surfaces (13) facing away from one another in the insertion direction.

9. Mechanism according to Claim 8,
**characterised in that**
viewed in the insertion direction, on both sides of the contact plate (12) in each case the same gripping elements in the same arrangement are provided.

10. Mechanism according to any of Claims 1 to 9,
**characterised in that**
the longitudinal guides (5) can be moved towards one another synchronously in order to bring the gripping elements into contact with the load unit (1).

11. Mechanism according to any of Claims 1 to 10,
**characterised in that**
the longitudinal guides (5) are connected to one another via a driven spindle (18), whose ends are respectively mounted rotationally on one of the longitudinal guides (5).

12. Mechanism according to Claim 11,
**characterised in that**
the end of a spindle (18) not connected to the drive unit is fitted in a spindle nut (18a) arranged in a fixed position on a longitudinal guide (5).

13. Mechanism according to any of Claims 1 to 12,
**characterised in that**
the drive unit is formed by a servomotor (19) which, when it reaches a predetermined motor current value, can be automatically limited to that value.

14. Mechanism according to any of Claims 1 to 13,
**characterised in that**
the longitudinal guides (5) are articulated to one another via a double lever (21) mounted to pivot on the frame (20) and mid-way between the respective longitudinal guides (5).

## Revendications

1. Dispositif (3) pour recevoir et évacuer des unités de chargement (1), en particulier dans des rayonnages (2), comportant un dispositif de prise (4) pour l'unité de chargement, dont les pinces (6) sont guidées dans des guides longitudinaux (5) agencés parallèlement les uns aux autres, dans un plan horizontal, sont déplaçables dans la direction d'introduction, de façon bilatérale, à côté des surfaces latérales de l'unité de chargement (1), et, pour la saisie, peuvent être appliquées, sous l'action d'une force, contre la surface latérale à chaque fois opposée de l'unité de chargement, au moins une plaque de saisie étant prévue sur chaque pince (6) et les plaques de saisie des deux pinces étant opposées l'une à l'autre et étant orientées parallèlement l'une à l'autre,
**caractérisé en ce que** chaque pince (6) présente au moins deux éléments de saisie, réalisés de façon différente, pouvant être appliqués de façon synchrone contre les surfaces latérales.

2. Dispositif selon la revendication 1,
**caractérisé en ce que** les éléments de saisie comportent au moins deux plaques de saisie (7, 8, 9, 10).

3. Dispositif selon la revendication 2,
**caractérisé en ce qu'**une première plaque de saisie (7, 10) est réalisée comme plaque de saisie ayant une surface plane granulée.

4. Dispositif selon la revendication 2,
**caractérisé en ce que**, dans une seconde plaque de saisie (8, 9), une pluralité d'évidements verticaux en forme de dents de scie sont réalisés comme plaque de saisie.

5. Dispositif selon la revendication 4,
**caractérisé en ce que** l'épaisseur de la seconde plaque de saisie (8, 9) est plus petite que l'épaisseur de la première plaque de saisie (7, 10).

6. Dispositif selon une des revendications 1 à 5,
**caractérisé en ce que**, sur au moins une des plaques de saisie (7, 8, 9, 10), au moins une saillie du type mandrin (mandrin 16), s'étendant perpendiculairement à celle-ci et vers la pince opposée (6), est agencée.

7. Dispositif selon la revendication 6,
**caractérisé en ce que** la longueur du mandrin (16) est plus grande que l'épaisseur de la première plaque de saisie (7, 10).

8. Dispositif selon une des revendications 1 à 7,
**caractérisé en ce que** chaque pince (6) présente une plaque d'appui (12) s'étendant vers la pince opposée (6) ayant des surfaces d'appui (13) verticales, écartées l'une de l'autre, dans la direction d'insertion.

9. Dispositif selon la revendication 8,
**caractérisé en ce que**, dans la direction d'insertion, sur les deux côtés de la plaque d'appui (12), à chaque fois les mêmes éléments de saisie sont prévus dans le même agencement.

10. Dispositif selon une des revendications 1 à 9,
**caractérisé en ce que** les guides longitudinaux (5), pour l'appui des éléments de saisie contre l'unité de chargement (1), peuvent être déplacés de façon synchrone l'un par rapport à l'autre.

11. Dispositif selon une des revendications 1 à 10,
**caractérisé en ce que** les guides longitudinaux (5) sont reliés ensemble par l'intermédiaire d'un axe entraîné (18), dont les extrémités sont montées de façon rotative, à chaque fois, sur un des guides longitudinaux (5).

12. Dispositif selon la revendication 11,
**caractérisé en ce que** l'extrémité, non reliée à l'entraînement, d'un axe (18) est montée dans un écrou (18a) agencé de façon fixe sur le guide longitudinal (5).

13. Dispositif selon une des revendications 1 à 12,
**caractérisé en ce que** l'entraînement est formé par un servomoteur (19), qui, lorsqu'une valeur de courant de moteur prédéterminée est atteinte, peut être limité automatiquement à cette valeur.

14. Dispositif selon une des revendications 1 à 13,
**caractérisé en ce que** les guides longitudinaux (5) sont reliés ensemble de façon articulée par l'intermédiaire d'un levier double (21) monté de façon rotative, à chaque fois, de façon centrale par rapport aux guides longitudinaux (5), sur le bâti (20).
